# EUROPEAN PATENT APPLICATION

(11) **EP 4 464 393 A1**
(43) Date of publication of application: **20.11.2024**
(21) Application number: 22919867.6
(22) Date of filing: 09.10.2022
(51) Int. Cl.: B01D 9/02

(54) **CONTINUOUS FALLING FILM MELTING CRYSTALLIZER**

(30) Priority: 14.01.2022 CN 202210046730
(71) Applicant: Shanghai Dodgen Chemical Technology Co., Ltd., Shanghai 201721 (CN)
(72) Inventor: KANG, Xiaoling, Shanghai 201721 (CN); LIANG, Yongjun, Shanghai 201721 (CN); DING, Yongliang, Shanghai 201721 (CN); LI, Bowen, Shanghai 201721 (CN)
(74) Representative: Algemeen Octrooi- en Merkenbureau B.V.
(86) International application number: PCT/CN2022/124105
(87) International publication number: WO 2023/134233

(57) **Abstract**

The present invention provides a continuous falling film melt crystallizer, including a cylinder, wherein a feeding port and a discharging port are respectively provided in a top region and a bottom of the cylinder; crystallization zones are sequentially provided within the cylinder in several levels from top to bottom; each crystallization zone is provided with multiple vertically arranged crystallization tubes; heat exchange tubes are sleeved onto respective crystallization tube, with crystallization tubes and heat exchange tubes in adjacent crystallization zones being in one-to-one correspondence and in communication with each other; crystallization tubes in the top level and the crystallization tubes in the bottom level are in communication with the feeding port and the discharging port, respectively; a cooling/heating medium inlet/outlet communicating with top ends of the heat exchange tubes is provided on the cylinder for each level of crystallization zone, and in the bottom level of the crystallization zones, a cooling/heating medium inlet/outlet communicating with bottom end of the heat exchange tubes is provided in a lower region of the cylinder. In the present invention, cooling/heating medium inlet/outlets are additionally arranged in the middle of the cylinder, such that the heat exchange uniformity between a material supply to be purified and a cold medium in the upper region and lower region of the cylinder can be improved, and a uniformity of crystallization in the upper region and lower region of the cylinder is further improved.

## Description

### FIELD OF THE INVENTION

The present application relates to the technical field of crystallization equipment, and in particular to a continuous falling film melt crystallizer.

### BACKGROUND OF THE INVENTION

Crystallization refers to a process of a substance forming crystals from a liquid form (liquid or melt) or vapor form. Crystallization is an important method for solid purification. It can separate high-purity products and has the advantages of low energy consumption, safe operation, and a wide range of applications (such as separation and purification of azeotropes or heat-sensitive substances that cannot be separated by conventional separation methods), etc.

Falling film crystallization is a new type of crystallization separation technology, which includes three steps: crystallization, sweating and melting. The working mechanism thereof is as follows: a material supply flows from top to bottom along one side of tube walls and crystallizes during this flow process; meanwhile, the cooling medium flows along another side of the tube walls, and heat transfer occurs between the cooling medium and the material supply during the flow process, which cools the material.

A falling film melt crystallizer is an equipment used in falling film crystallization process. To this date, falling film melt crystallizers generally use distributors to evenly distribute materials as well as cooling/heating medium onto inner and outer walls of crystallization tubes, respectively, and control the flow rate of the material supply or cooling/heating medium to make them flow downwardly in a film-like form along the tube walls under the action of gravity. In order to maintain a relatively good film-forming effect, flow rates are required to be relatively slow, the crystallization process may take a long time, and crystallization tubes are usually round/cylindrical tubes. Materials or cooling/heating medium will tend to aggregate in radial direction under the action of gravity, resulting in uneven distribution of materials or cooling/heating medium, thereby a heat exchange area is reduced and heat exchange efficiency is reduced. For a crystal film, a thickness thereof in a radial direction of the crystallization tube is not uniform along a circumferential direction the crystallization tube, and is greater at an upper region of the crystallization tube than at a lower region of the crystallization. This unevenness in film thickness further reduces heat transfer efficiency and increases time duration of crystallization and/or melting, which is not beneficial to reduce energy consumption. Still further, the material supply will develop a downwardly impact force due to this unevenness in film thickness. A combination of such an impact force with the gravity force of the crystallization film per ser may cause the crystallization film to fall off from tube walls likely, causing the crystals that have already been precipitated out to re-melt into the material supply, and further increasing the time duration of crystallization and energy consumption. In case large pieces of crystals fall off, they may even cause blockage in crystallization tubes, making it easy for the crystals to get laced with impurities. Moreover, for a blocked crystallization tube, sweatings cannot be discharged smoothly during sweating process, which will have a detrimental effect on a purity of the product. In addition, during sweating process, sweating comes out when the temperature is raised to be slightly below a melting point of the product by the heating medium. Formation of sweating on tube walls will also make the crystals fall easily and block the crystallization tube, which on one hand making it difficult for the sweating to get discharged thus deteriorating a purity of the product, and on the other hand deteriorating the product yield since crystals may partially get melted and then discharged after they fall into the sweating.

In summary, in separation and purification processes using prior falling film melt crystallizers, the energy consumption is high, the crystallization thickness is ununiform, the purity and yield of products are low, and the continuity of production is poor, which restricts an improvement of production efficiency.

### SUMMARY OF THE INVENTION

In view of the above-mentioned shortcomings in prior art, an object of the present invention is to provide a falling film melt crystallizer to solve the technical problems of high energy consumption, uneven crystal thickness, low product purity, low yield and poor production continuity in separation and purification processes using prior falling film melt crystallizers.

The present invention provides a falling film melt crystallizer , including a cylinder, wherein a feeding port and a discharging port are respectively provided in a top region and a bottom region of the cylinder, wherein: crystallization zones are sequentially provided within the cylinder in several levels from top to bottom; a crystallization zone in each level is provided with multiple vertically arranged crystallization tubes; heat exchange tubes are sleeved onto respective crystallization tubes, with crystallization tubes and heat exchange tubes in adjacent crystallization zones being in one-to-one correspondence and in communication with each other; crystallization tubes in a top level and crystallization tubes in a bottom level are in communication with the feeding port and the discharging port, respectively; wherein for each level of crystallization zone, a cooling/heating medium inlet/outlet communicating with top ends of the heat exchange tubes is provided on the cylinder; and in the bottom level of the crystallization zones, a cooling/heating medium inlet/outlet communicating with bottom end of the heat exchange tubes is further provided in a lower region of the cylinder.

The working principle of the present device is: when using the falling film melt crystallizer of the present invention for crystallization, cooling/heating medium is firstly introduced into the heat exchange tubes from the cooling/heating medium inlet/outlet provided in the top crystallization zone, and the material supply to be purified is introduced into the crystallization tubes from the feed port, the material supply exchanges heat with the cold medium, cools down and crystallizes during this flow process. At the same time, during the crystallization process, new cold medium can also be introduced into heat exchange tubes from a cooling/heating medium inlet/outlet provided in the middle region of the cylinder, thereby improving a uniformity of heat exchange between the material supply to be purified and the cold medium in upper and lower region of the cylinder, which in turn improves a uniformity of crystallization in the upper and lower region.

The beneficial effects of the present device are: compared with a conventional falling film melt crystallizer, by adding a cooling/heating medium inlet/outlet in middle region of the cylinder, the present invention can improve the uniformity of heat exchange between the material supply to be purified and the cold medium in the upper and lower region of the cylinder, which in turn improves the uniformity of crystallization in the upper and lower region.

Preferably, multiple swirling film distributors are additionally arranged in the cylinder, wherein the swirling film distributors are arranged between a liquid dispensing head and the crystallization tubes in the top level of the crystallization zones, and are in one-to-one correspondence with and meanwhile in communication with the crystallization tubes in the top level. The swirling film distributors are funnel-shaped, including a funnel body and a tubular part, with spiral guide grooves provided on an inner wall of the funnel body. Films of material supply may be formed from the swirling film distributor due to swirling flow. The spiral liquid dispensing grooves provided on the inner wall of the funnel body can make the material supply swirl, so that the material supply may enter into crystallization tubes in a more uniform way. Moreover, the swirl imparts to the material supply to be purified a certain initial speed in circumferential direction, thus reducing a tendency of radial converging of the material supply to be purified and further improving the uniformity of crystallization. The swirling flow method can also increase a film-forming speed for the materials and shorten crystallization time.

Preferably, a ventilation tube is provided in a tubular part of the swirling film distributor; a ventilation hole is provided in an upper part of the ventilation tube, and a guide platform is provided on a top end of the ventilation tube. An outer diameter of the ventilation tube is smaller than a radial length of a bottom end of the guide platform, specifically is 1/3-1/2 of the radial length of the bottom end of the guide platform. An inner diameter of the ventilation tube is smaller than an inner diameter of the tubular part, specifically is 1/3-1/2 of the inner diameter of the tubular part. The ventilation hole provided on the upper part of the ventilation tube is beneficial for discharging the air in the top crystallization tubes. The liquid material supply to be purified flowing from top to bottom encounters and comes into counter-current contact with the air flowing from bottom to top. The counter-current contact between the gas and liquid phases causes the material supply to be purified to form a swirling flow, ensuring a good film-forming effect, and allowing the material supply to enter into the crystallization tubes more evenly.

Preferably, the guide platform is conical or umbrella-shaped, and the conical or umbrella-shaped guide platform can play a "diversion" role on the material supply, so that the material supply may be evenly distributed on the inner wall of the tubular part and then flow evenly onto the inner wall of the crystallization tubes in a film form, which further improves the uniformity of crystallization for the material.

Preferably, multiple film redistribution heads are additionally provided in the cylinder. The film redistribution heads are installed at connections between two crystallization tubes that are provided in adjacent crystallization zones and are in communication with each other. Each film redistribution head include a material-redistribution platform and an air ventilation tube. The material-redistribution platform is provided at a top end of the air ventilation tube and is conical or umbrella-shaped; an outer diameter of the air ventilation tube is smaller than a radial length of a bottom end of the material-redistribution platform, and specifically is 1/3-1/2 of the radial length of the bottom end of the material-redistribution platform; an inner diameter of the air ventilation tube is smaller than the inner diameter of the crystallization tube, and specifically is 1/3-1/2 of the inner diameter of the crystallization tube. An air ventilation hole provided in an upper part of the air ventilation tube is beneficial for discharging air in crystallization tubes of other crystallization zones. The liquid material supply to be purified flowing from top to bottom comes into counter-current contact with the air flowing from bottom to top. The counter-current contact between the gas and liquid phases causes the material supply to be purified to form a swirling flow, ensuring a good film-forming effect, so that the material supply to be purified may be more evenly distributed on the inner wall of the crystallization tubes in other crystallization zone. The conical or umbrella-shaped material-redistribution platform can play a "diversion" role on the material supply, so that the material supply can be evenly distributed on the inner wall of the crystallization tubes, improving the uniformity of crystallization for the material.

Preferably, the film redistribution head further includes several guide vanes that are regularly distributed around the air ventilation tube, wherein the guide vanes are obliquely arranged between the air ventilation tube and the inner wall of the crystallization tube, with the air ventilation tube being fixed to the inner wall of the crystallization tube via the guide vanes.

The guide vanes are in the shape of a triangular prism. The guide vanes in contact with the inner wall of the crystallization tube plays a "diversion" role on the material supply to be purified, so that the material supply to be purified may be evenly distributed onto the inner wall of the crystallization tube; by this, a more uniform heat exchange and cooling effect may be obtained for the material supply to be purified, and the uniformity of crystallization for the material supply to be purified may be improved. An approximately "V"-shaped capture opening that is wide at the top and narrow at the bottom is formed between two adjacent guide vanes that are in contact with the inner wall of the crystallization tube; such a capture opening can effectively support and capture the crystals to prevent the crystals from falling off.

Preferably, a material supply distributor is additionally provided in the cylinder and is in communication with the feeding port. The material supply distributor is used to divert the material supply to be purified.

Preferably, the material supply distributor includes a material supply distribution pipe network and liquid dispensing heads. The material supply distribution pipe network includes a first pipes and a second pipes. All the first pipes extend radially from the feed port in a radial direction, and all second pipes are annular pipes surrounding the feed port in a circumferential direction; the first pipes and second pipes intersect with each other, and are interconnected with each other. Liquid dispensing heads are provided at intersections between the first tubes and the second tubes, which are in the shape of an inverted funnel, and several spiral liquid dispensing grooves are provided on an inner wall of the liquid dispensing head. All the liquid dispensing heads are in one-to-one correspondence with the crystallization tubes in the top crystallization zone. The material supply to be purified can be diverted through the first pipes and the second pipes, so that the material supply to be purified entering the liquid dispensing head has a certain initial circumferential velocity, which is beneficial for reducing a tendency of radial converging of the material supply to be purified. Multiple spiral separation grooves provided on the inner wall of the liquid dispensing head can make the material supply to be purified flow in a swirling manner, so that the material supply to be purified may enter into the crystallization tube more evenly; the swirling flow allows the material supply to be purified to have a certain initial circumferential velocity, which may reduce a tendency of radial converging of, and further improve the uniformity of crystallization. The swirling flow method can also increase the film-forming speed of the material and shorten the crystallization time.

Preferably, each level of crystallization zone is provided with a cooling/heating medium guide plate that is located below the cooling/heating medium inlet/outlet, with multiple guide holes being provided on the cooling/heating medium guide plate, wherein the guide holes are in one-to-one correspondence with and meanwhile in communication with the heat exchange tubes. The guide holes provided on the cooling/heating medium guide plate can guide the cold medium and dispense it into a film, thereby distribute the cold medium and make it flow in a film-like manner in the heat exchange tube, thus improving a uniformity of heat exchange between the cold medium and the material supply to be purified.

Preferably, a filter screen is additionally provided in the cylinder, and the filter screen is provided between the discharge port and the crystallization tubes in the lowermost level of the crystallization zones. The filter screen provided between the discharge port and the crystallization tubes in the lowermost crystallization zone can prevent crystals from falling and blocking a discharge passage provided between the discharge port and the cylinder, and the filter screen can be used to collect the material supply into its middle region; the material supply then may get melted and crystallized again, which is beneficial for improving a yield and realizing a continuous production.

Preferably, multiple bosses are evenly provided on the inner wall of the crystal tube.

Preferably, the axial height of the boss is 0.5-3 mm, preferably 0.5-1 mm. Since a thickness of crystal film is generally 1-2 mm, if the height of the boss is too high, the material supply will tend to flow in a stream-like manner rather than in a film-like manner, which is not beneficial for improving the uniformity of crystallization; and if the height of the boss is too low, the diversion effect on the material supply will not be obvious/sufficient.

Preferably, an upper portion of a longitudinal section of the boss is in a shape which is narrow at the top and wide at the bottom, such as triangle or arc-shaped. The boss with a narrow upper portion and a wide lower portion in the longitudinal section can play a "diversion" role on the material supply to be purified, making the heat exchange and cooling of the material supply to be purified more uniform, and improving a uniformity in crystallization of the material supply to be purified. The upper portion in the longitudinal section of the boss is in a shape which is narrow at the top and wide at the bottom, so that an approximately "V"-shaped capture opening with a wide upper portion and narrow lower portion is formed between two adjacent, i.e., a left and a right, bosses, and the capture opening can effectively support and block the crystals to prevent the crystals from falling off.

Preferably, the inner wall of the crystallization tube is provided with slip-resistant textures, which protrude outward or are recessed inward by 0.1-1 mm from the inner wall of the crystallization tubes. Since the slip-resistant textures protrude outward or are recessed inward by 0.1-1 mm from the inner wall of the crystallization tubes, they may improve an gripping force of the crystals on the inner wall surface of the crystallization tubes, and prevent the crystals from falling off the walls of the crystallization tubes.

Preferably, a material overflow port is provided on an upper portion of the cylinder, and excess material supply can be discharged from the cylinder through the material overflow port.

Preferably, an air overflow port is provided at the top of the cylinder.

### BRIEF DESCRIPTION OF THE DRAWINGS

In order to more clearly illustrate the technical solution of the present application, drawings required for use in the embodiments are briefly introduced below. Obviously, for one of ordinary skill in the art, other drawings can be obtained based on these drawings without any creative work.
FIG. 1 is a schematic diagram illustrating a longitudinal sectional view of a falling film melt crystallizer;
FIG. 2 is a bottom view of a material supply distribution pipe network;
FIG. 3 is a partial enlarged view of region A in FIG. 1;
FIG. 4 is a schematic diagram illustrating a longitudinal sectional view of a liquid dispensing head;
FIG. 5 is a bottom view of the dispensing head;
FIG. 6 is a bottom view of a cooling/heating medium guide plate;
FIG. 7 is a schematic structural diagram illustrating a longitudinal sectional view of the cooling/heating medium guide plate;
FIG. 8 is a schematic structural diagram illustrating a longitudinal sectional view of an assembly structure in which the cooling/heating medium guide plate, crystallization tubes and the cooling/heating medium guide tubes are assembled together;
FIG. 9 is a schematic structural diagram illustrating a longitudinal sectional view of a swirling film distributor;
FIG. 10 is a bottom view of the swirling film distributor;
FIG. 11 is a schematic structural diagram illustrating a longitudinal sectional view of the connection structure between the swirling film distributor and the crystallization tube;
FIG. 12 is a schematic structural diagram illustrating a longitudinal sectional view of a film redistribution head assembled in the crystallization tube;
FIG. 13 is a top view of the film redistribution head;
FIG. 14 is a schematic structural diagram of a guide vane;
FIG. 15 is a schematic structural diagram illustrating a longitudinal sectional view of an inner wall of a crystallization tube provided with bosses;
FIG. 16 is a schematic diagram illustrating a longitudinal sectional shape of the bosses;
FIG. 17 is a schematic structural diagram illustrating a longitudinal sectional view of an inner wall of a crystallization tube provided with slip-resistant textures;
FIG. 18 is a schematic structural diagram illustrating a longitudinal sectional view of an assembled structure in which a lower end of the liquid dispensing head fits into a funnel body of the swirling film distributor;
FIG. 19 is a schematic structural diagram illustrating a longitudinal sectional view of a connection between the swirling film distributor and the crystallization tube, wherein an inner wall in a lower region of a tubular part of the swirling film distributor is in a flared configuration;
FIG. 20 is a schematic structural diagram illustrating a longitudinal sectional view of another assembly structure in which the cooling/heating medium guide plate, crystallization tubes and the cooling/heating medium guide tubes are assembled together.

Illustration: 1-cylinder, 2-feed port, 3-discharge port, 410-first pipe, 420-liquid dispensing head, 421-liquid dispensing groove, 430-second pipe, 5-cooling/heating medium guide plate, 51-guide hole, 6-crystallization tube, 61-boss, 62-slip-resistant texture, 7-heat exchange tube, 8-swirling film distributor head, 810-funnel body, 811-guide groove, 820-tubular part, 9-exhaust channel, 10-ventilation tube, 101-ventilation hole, 11-guide platform, 12-crystallization tube fixture, 13-film redistribution head, 1301-material-redistribution platform, 1302-air ventilation tube, 13021-air ventilation hole, 1303-guide vane, 14-heat exchange tube fixture, 15-filtering screen, 16-air overflow port, 17-cooling/heating medium inlet/outlet, 18-material overflow port, 19-connecting piece.

### DETAILED DESCRIPTION OF THE EMBODIMENTS

Hereinafter, the embodiments of the present invention will be described by means of specific examples. Those skilled in the art can easily understand other advantages and efficacy of the present invention from the content disclosed in this specification. The present invention can also be implemented or applied through other different specific embodiments, and various details in this specification can also be modified or changed in various ways based on different viewpoints and applications without departing from the spirit of the present invention.

It should be noted that the diagrams provided in this embodiment only illustrate the basic concept of the present invention in a schematic manner. The drawings only show the components related to the present invention and do not draw according to the actual implementation of the component numbers, shapes and components. During actual implementation of these embodiments, the type, quantity, and proportion of each component may be arbitrarily changed, and the component layout may also be more complex. The structures, proportions, sizes, etc. shown in the drawings attached to this specification are only used to coordinate with the content disclosed in the specification for the understanding and reading of those familiar with this technology. They are not used to limit the conditions for the implementation of the present invention., so it has no technical substantive significance. Any structural modifications, changes in proportions, or adjustments in size, without affecting the efficacy that the present invention can produce and the purposes that can be achieved, should still fall within the scope of the technical content disclosed by the present invention. At the same time, terms such as "upper", "lower", "left", "right", "middle", etc. cited in this specification are only for convenience of description and are not used to limit the scope of the present invention, variations or adjustments in their relative relationships, provided there is no substantial change in technical schemes, shall also be deemed to be within the scope of the present invention.

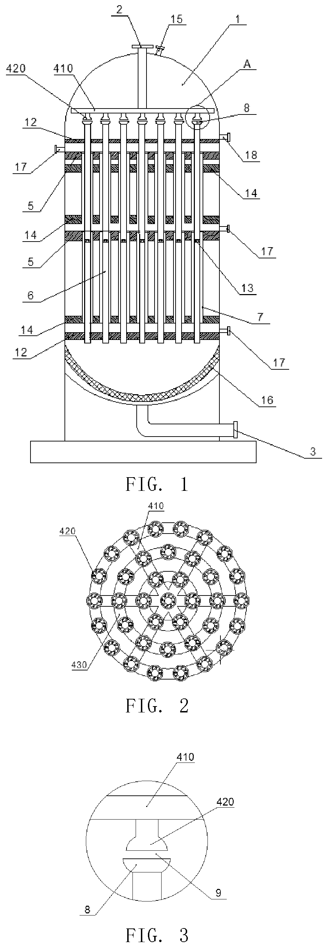

As shown in FIG. 1, the falling film melt crystallizer is used to separate and purify materials through a falling film crystallization process.

The falling film melt crystallizer according to the embodiment of the present invention includes a cylinder 1.

A feed port 2 and an air overflow port 16 is provided on the top of the cylinder 1. The feed port 2 is an entrance for the material supply to be purified to enter into the cylinder 1. A discharge port 3 is provided at the bottom of the cylinder 1, and the discharge port 3 is a channel for materials (such as mother solution, sweating liquid, and purified final products) to discharge from the cylinder 1. A material overflow port 18 is provided on an upper region in the outer wall of the cylinder 1, and excess materials may be discharged out of the cylinder via the material overflow port 18.

A material supply distributor, an upper crystallization zone and a lower crystallization zone is sequentially provided within the cylinder 1 from top to bottom.

Both the upper crystallization zone and the lower crystallization zone are equipped with crystallization tubes 6, heat exchange tubes 7, cooling/heating medium inlets/outlets 17, and cooling/heating medium guide plates 5.

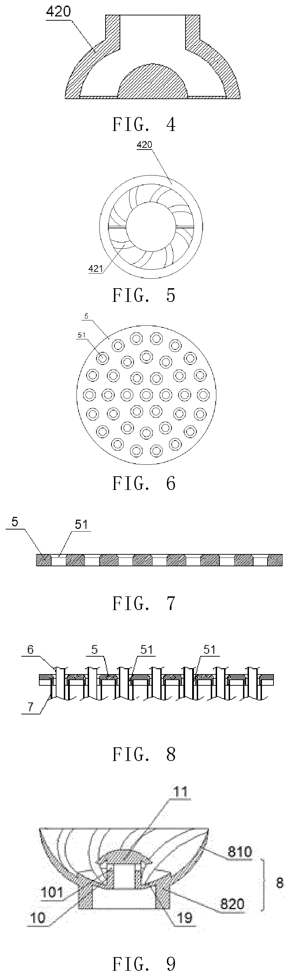

Specifically, as shown in FIGS. 1-5, the material supply distributor includes a material supply distribution pipe network, and the feed port 2 is in communication with the material supply distribution pipe network through a feed pipe. The material supply distribution pipe network includes a couple of first pipes 410 and a couple of second pipes 430. All first pipes 410 extend radially from the feed port 2 in a radial direction, and all second pipes 430 are annular pipes surrounding the feed port 2 in a circumferential direction; the first pipes 410 and second pipes 430 intersect with each other, and are interconnected with each other.

Liquid dispensing heads 420 are provided at intersections between the first pipes 410 and the second pipes 430, and the liquid dispensing head 420 is in one-to-one correspondence with the crystallization tubes 6. The liquid dispensing head 420 is in a shape of an upside-down funnel, and multiple liquid dispensing grooves 421 are provided on an inner wall of the liquid dispensing head 420. The liquid dispensing grooves 421 are in a spiral shape (left-handed spiral or right-handed spiral may be chosen according to geographical location of the device during specific implementation). Provision of liquid dispensing heads 420 at intersections between the first pipes 410 and the second pipes 430 is beneficial since it may impose, to the material supply to be purified within the liquid dispensing head 420, a certain initial circumferential velocity thus reducing a tendency of radial converging of the material supply to be purified. Multiple spiral liquid dispensing grooves 421 provided on the inner side wall of the liquid dispensing head 420 can make the material supply to be purified flow in a swirling manner, so that the material supply to be purified may enter in a more uniform way into the crystallization tube 6. Secondly, the swirling flow allows the material supply to be purified to have a certain initial circumferential velocity, which may reduce a tendency of radial converging of the material supply to be purified and further improve a uniformity of crystallization. The way to form a swirling flow can also increase a film-forming speed of the material supply to be purified and shorten crystallization time.

Both ends of all crystallization tubes 6 are in communication with the feed port 2 and the discharge port 3, respectively. Heat exchange tubes 7 are sleeved onto the crystallization tubes 6 in a nested manner. The upper and lower ends of the heat exchange tubes 7 are in communication with the adjacent cooling/heating medium inlet/outlet 17 respectively, and the crystallization tubes 6 is fixed on the inner wall of the cylinder 1 via the crystallization tube fixture 12. Through holes are provided on the crystallization tube fixture 12, and the diameter for the through holes is slightly larger than an outer diameter for the crystallization tubes 6. The crystallization tubes 6 can be in the shape of a circular cylinder, a rectangular prism, a hollow triangular prism or a hollow polygon. Compared with a conventional falling film melt crystallizer, when the falling film melt crystallizer of the embodiment of the present invention is used for crystallization, fresh cooling medium can be introduced into the heat exchanger tubes 7 through the cooling/heating medium inlet/outlet 17 added in the middle region of the cylinder 1; thus, uniformity of heat exchange during the crystallization process for the upper and lower crystallization zones may be improved, thereby achieving a more uniform film thickness for crystallization layers in the upper and lower crystallization zones. Secondly, during a process where the material supply flows from top to bottom, impurities in the crystallization layers within the crystallization tubes 6 in the lower crystallization zone can be eluted, thereby improving the purity of the crystallization layer. In addition, it can also have a flushing effect during the sweating stage and further improves the purity of the final product.

As shown in FIGS. 1 and 6-8, the cooling/heating medium guide plate 5 is arranged between an upper end of the heat exchange tubes 7 and the cooling/heating medium inlet/outlet 17 located above and adjacent thereto. The cooling/heating medium guide plate 5 is provided with multiple guide holes 51. All guide holes 51 is in one-to-one correspondence and are in communication with respective heat exchange tubes 7. A bottom surface of the cooling/heating medium guide plate 5 is provided with a groove for insertion of a heat exchange tube 7. The cooling/heating medium guide plate 5 can guide/divert the cold medium, thereby causing the cold medium to flow in a film-like manner along an inner wall of the heat exchange tube 7, making the heat exchange between the material supply to be purified and the cold medium more uniform and thereby improving the uniformity of crystallization. The cooling/heating medium guide plate 5 can further function to fix the heat exchange tubes 7 and the crystallization tubes 6 on the inner wall of the cylinder 1.

As shown in FIG. 1 and FIGS. 9-11, a film distributor is additionally provided in the cylinder 1, and the film distributor includes multiple swirling film distributors 8. The swirling film distributors 8 are located directly below the liquid distributor head 420 and are installed at the top end of the crystallization tubes 6. The swirling film distributors 8 are in one-to-one correspondence with the liquid distributor heads 420 and the crystallization tubes 6. The swirling film distributor 8 is funnel-shaped, including a funnel body 810 and a tubular part 820 connected to a lower end of the funnel body 810. Spiral guide grooves 811 are provided on the inner wall of the funnel body 810 of the swirling film distributor 8 (left-handed spiral or right-handed spiral may be chosen according to geographical location of the device during specific implementation). A ventilation tube 10 is provided in the swirling film distributor 8, and the ventilation tube 10 is fixedly installed in the tubular part 820 of the swirling film distributor 8 through a connecting piece 19. A guide platform 11 is provided on the top of the ventilation tube 10, and the guide platform 11 is conical or umbrella-shaped. Ventilation holes 101 are provided on an upper region of a side wall of the ventilation tube 10.

Specifically, a radial length of the bottom end of the guide platform 11 is smaller than an inner diameter of the tubular part 820 of the swirling film distributor 8, specifically, is 1/2-1/3 of the inner diameter of the tubular part 820 of the swirling film distributor 8. A height of the guide platform 11 is smaller than the height of the funnel body 810 of the swirling film distributor 8, specifically, is 1/3-1/2 of the height of the funnel body 810 of the swirling film distributor 8.

The conical or umbrella-shaped guide platform 11 provided at the top of the ventilation tube 10 can play a "diversion" function onto the materials supplied, so that the materials supplied may be evenly distributed onto the inner wall of the tubular part 820, and flow evenly along the inner wall of the tubular part 820 to the crystallization tubes 6 in the upper layer in a film-like manner, so as to improve a uniformity of crystallization of the material.

The ventilation holes 101 provided in the upper region of the side wall of the ventilation tube 10 are beneficial for discharging air in the crystallization tubes 6 through the exhaust channel 9. The liquid material supply to be purified flowing from top to bottom encounters and comes into counter-current contact with the air flowing from bottom to top. The counter-current contact between the gas and liquid phases causes the material supply to be purified to form a swirling flow, ensuring a good film-forming effect, and allowing the material supply to be purified to enter into the crystallization tubes 6 in the upper crystallization zone more evenly.

In order to further fix the crystallization tubes 6, each crystallization zones is additionally provided with a crystallization tube fixture 12. Multiple through holes are provided on the crystallization tubes fixture 12. A diameter of the through holes is slightly larger than the outer diameter of the crystallization tubes 6. All the through holes are respectively are in one-to-one correspondence and in communication with the crystallization tubes 6.

In order to further fix the heat exchange tubes 7, each crystallization zones is additionally provided with a heat exchange tube fixture 14. Multiple through holes are provided on the heat exchange tube fixture 14. A diameter of the through holes is slightly larger than the outer diameter of the heat exchange tubes 7. The through holes are respectively in one-to-one correspondence and in communication with the heat exchange tubes 7.

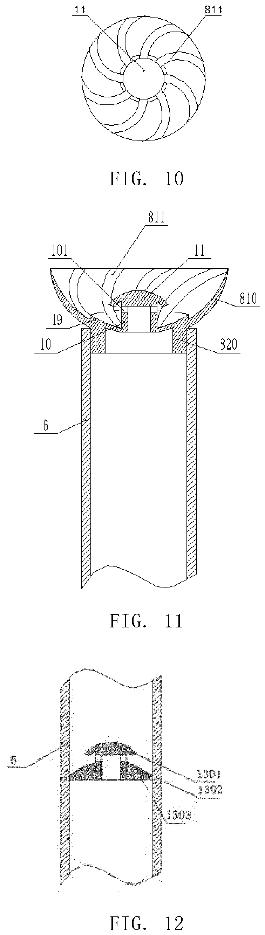

As shown in FIG. 11 and FIGS. 12-14, film redistribution heads 13 are provided in the crystallization tubes 7 of the lower crystallization zone. A film redistribution head 13 includes an air ventilation tube 1302 and a material-redistribution platform 1301 arranged at the top end of the air ventilation tube 1302. The air ventilation tube 1302 is fixed to an inner wall of the crystallization tube 6 through several guide vanes 1303. The guide vanes are evenly distributed around the air ventilation tube 1302. The guide vanes are arranged in a sloped way between the air ventilation tube 1302 and the crystallization tube 6. The guide vanes 1303 are in the shape of a triangular prism, and the material-redistribution platform 1301 is conical or umbrella-shaped.

Specifically, the conical or umbrella-shaped material-redistribution platform 1301 provided on the top of the air ventilation tube 1302 can play a "diversion" function onto the materials supplied, so that the material supply may be evenly distributed onto the guide vanes 1303, and flows along the guide vanes 1303 to the inner wall of the crystallization tubes 6 in the lower crystallization zone; the guide vanes 1303 in contact with the inner wall of the crystallization tubes 6 can play a "diversion" function on the material supply to be purified, so that the heat exchange and cooling of the material supply to be purified are more uniform, thus improving a uniformity in crystallization of the material supply to be purified. An approximately "V"-shaped capture opening that is wide at the top and narrow at the bottom is formed between adjacent guide vanes 1303 that are in contact with the inner wall of the crystallization tubes 6; such a capture opening can effectively support and capture the crystals to prevent the crystals from falling off.

The air ventilation holes 13021 arranged in the upper region of the air ventilation tube 1302 are beneficial for discharging the air in the crystallization tubes 6 through the exhaust channel 9. The liquid material supply to be purified flowing from top to bottom encounters and comes into counter-current contact with the air flowing from bottom to top. The counter-current contact between the gas and liquid phases causes the material supply to be purified to form a swirling flow, ensuring a good film-forming effect, so that the material supply to be purified may be evenly distributed on the inner wall of the crystallization tubes 6 in the lower crystallization zone.

A filter screen 15 is also provided in the cylinder 1; the filter screen 15 is arranged between the discharge port 3 and the crystallization tubes 6 and is recessed downwardly. The filter screen 15 is able to prevent crystals from falling and blocking a discharge passage between the discharge port 3 and the cylinder 1. Secondly, the filter screen 15 is recessed downwardly, so that the material supply can be gathered into the middle region, and then get melted and crystallized again, which is beneficial for improving a yield and realizing a continuous production.

A working process of the falling film melt crystallizer of according to the embodiment of the present invention is as follows.

The material supply to be purified is introduced into the feed port 2, and enters the first pipes 410 and the second pipes 430 through the feed pipe to achieve diverting, and then passes into the liquid separation heads 420 provided at the intersections of the first pipes 410 and the second pipes 430. The material supply to be purified entering the liquid dispensing head 420 has a certain initial circumferential velocity, which can reduce a tendency of radial converging of the material supply to be purified. The spiral liquid dispensing grooves 421 provided on the inner side wall of the liquid separation head 420 allows the material supply to be purified to enter the swirling film distributor 8 in a swirling manner.

The spiral guide grooves 811 provided on the inner wall of the funnel body 810 of the swirling film distributor 8 allows the material supply to be purified to enter the tubular part 820 in a swirling manner. The conical or umbrella-shaped guide platform 11 at the upper end of the ventilation tube 10 arranged in the tubular part 820 plays a "diversion" role on the material supply to be purified, so that the material supply to be purified may be evenly distributed onto the inner wall of the tubular part 820. The ventilation holes 101 arranged in the upper part of the ventilation tube 10 allow the air in the crystallization tubes 6 to be discharged through the exhaust channel 9, and the material supply to be purified forms a swirling flow, thereby ensuring a good film-forming effect, so that the material supply to be purified may be evenly distributed on the inner wall of the tubular part 820, and flow along the inner wall of the tubular part 820 to the inner wall of the crystallization tubes 6 in a film-like manner.

The material supply to be purified enters the crystallization tubes 6 in a swirling manner, and flows along the inner wall of the crystallization tubes 6 in a film-like manner. The cold medium is guided/diverted through the cooling/heating medium guide plate 5 from the cooling/heating medium inlet/outlet 17 provided at the upper region of the cylinder 6, then enters the heat exchange tubes 7, and flows along the inner wall of the heat exchange tube 7 in a film-like manner. During the flow process, heat is transferred from the material supply to be purified to the cold medium, and the material supply to be purified cools down and then crystallizes. During this process, the temperature of the cold medium gradually increases, and the temperature difference between the cold medium and the material supply decreases gradually.

The material supply gradually flows along the crystallization tubes 6 provided in the upper crystallization zone to the connection of the two crystallization tubes 6 in the upper and lower crystallization zones which are in communication with each other, and the conical or umbrella-shaped material-redistribution platforms 1301 provided at this connection plays a "diversion" role on the material supply to be purified, so that the material supply to be purified may be evenly distributed onto the guide vanes 1303 and flow along the guide vane 1303 to the inner wall of the crystallization tubes 6 in the lower crystallization zone. Air in the crystallization tubes 6 in the lower crystallization zone is discharged through the air ventilation hole 13021 provided in the upper region of the air ventilation tube 1302, and the material supply to be purified forms a swirling flow.

Fresh cold medium is introduced into the heat exchange tubes 7 through the cooling/heating medium inlet/outlet 17 provided in the middle region of the cylinder 1, and the material supply to be purified exchanges heat with this cold medium, cools down, and then crystallizes.

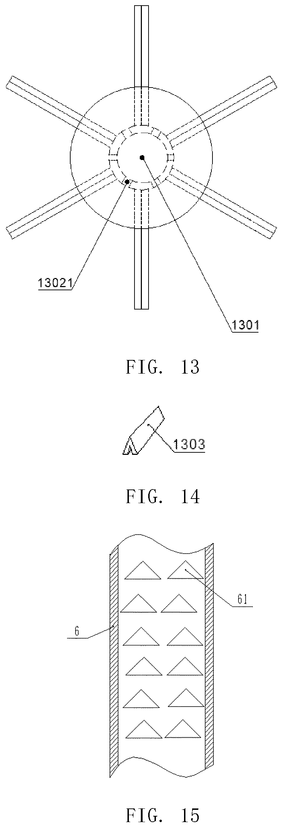

As shown in FIGS. 15-16, in another alternative embodiment of the present invention, multiple bosses 61 are uniformly provided on the inner wall of the crystallization tubes 6, and an axial height of the bosses 61 is 0.5-3mm, preferably 0.5-1 mm. The bosses 61 are triangular or arc-shaped. Specifically, the bosses 61, the longitudinal sections of which are narrow at the top and wide at the bottom, play a "diversion" role on the material supply to be purified, making the heat exchange and cooling of the material supply to be purified more uniform, and improving a uniformity in crystallization of the material supply to be purified. An approximately "V"-shaped capture opening that is wide at the top and narrow at the bottom is formed between two adjacent, i.e., a left and a right, bosses 61. This capture opening can effectively support and block the crystals to prevent the crystals from falling off. Since a thickness of the crystal film is generally 1-2mm, if the height of the bosses 61 is too high, the material supply to be purified may tend to flow in a stream-like form instead of a film-like form, which is not beneficial for improving a uniformity in crystallization. If the height of the bosses 61 is too low, the diversion effect on the material supply will not be obvious/sufficient.

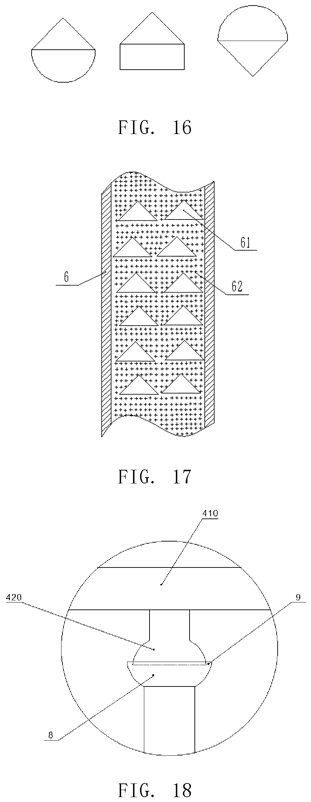

As shown in FIG. 17, in another alternative embodiment of the present invention, the inner walls of the crystallization tubes 6 are additionally provided with slip-resistant textures 62. The slip-resistant textures 62 protrude outward or are recessed inward by 0.1-1 mm from the inner wall of the crystallization tubes 6, preferably by 0.1-0.5mm. The slip-resistant textures 62 can improve an gripping force of the crystals on the inner wall surface of the crystallization tubes 6 and prevent the crystals from falling off the walls of the crystallization tubes 6. The slip-resistant textures 62 can be star-shaped, wavy-shaped, cross-shaped, etc., as long as a mortise-tenon configuration may be developed by the crystals.

As shown in FIG. 18, in another alternative embodiment of the present invention, the lower end of the liquid dispensing head 420 extends/is fitted into the funnel body 810 of the swirling film distributor head 8, and a radius at the bottom end of the liquid dispensing head 420 is smaller than the inner diameter at the bottom end of the funnel body 810 of the swirling film distributor head 8. Specifically, when the material supply enters the swirling film distributor head 8 from the liquid dispensing head 420, because the lower end of the liquid dispensing head 420 penetrates/is fitted into the funnel body 810 of the swirling film distributor head 8, and the radius at the bottom end of the liquid dispensing head 420 is smaller than the radius at the bottom end of the funnel body 810 of the swirling film distributor head 8, the material supply to be purified can be prevented from splashing out of the funnel body 810, thereby improving the yield.

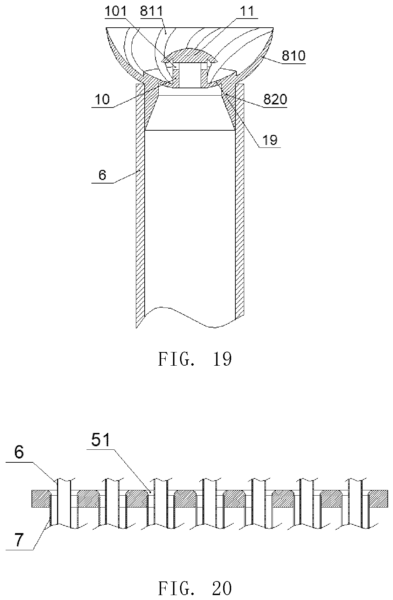

As shown in FIG. 19, in another alternative embodiment of the present invention, an inner diameter of the bottom portion of the tubular part 820 of the swirling film distributor 8 gradually increases from top to bottom, that is, a longitudinal sectional view of the bottom region of the tubular part 820 of the swirling film distributor is in a flared configuration. The inner wall in the bottom region of the tubular part 820 is flared-shaped (i.e., has a " 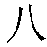 " configuration), so that after the material supply to be purified forms a swirling flow, it can smoothly moves along the inner wall of the tubular part 820 onto the inner wall of the crystallization tubes 6, thereby reducing an impact force of the material supply onto the inner wall of the crystallization tubes 6 when entering the crystallization tubes 6 from the tubular part 820, thus maintaining a good swirling effect on the inner wall of the crystallization tubes 6.

As shown in FIG. 20, in another alternative embodiment of the present invention, a cooling/heating medium guide plate 5 is disposed between the upper end of the heat exchange tubes 7 and the cooling/heating medium inlet/outlet 17 located above and adjacent thereto. The cooling/heating medium guide plate 5 is provided with multiple guide holes 51, all of which are in one-to-one correspondence and in communication with respective heat exchange tubes 7, and a diameter of the guide holes 51 is slightly larger than the outer diameter of the heat exchange tubes 7.

According to the present invention, the number of levels for the crystallization zones can be adjusted according to actual production needs. For example, the number of levels for the crystallization zone can be adjusted to be three according to actual production conditions. Correspondingly, a cooling/heating medium inlet/outlet 17 is provided at an upper region of the crystallization zone for each of the three levels, and a total length of the crystallization tubes in communication with each other through the three levels is equal to a total length of the crystallization tubes in communication with each other through two levels in case the number of levels for the crystallization zones is set to be two.

The above embodiments are merely illustrative of the principles and efficacy of the present invention, and are not intended to limit the present invention. Anyone familiar with the art may modify or alter the above embodiments without departing from the spirit and scope of the present invention. Therefore, all equivalent modifications or alterations made by a person of ordinary skill in the art without departing from the spirit and technical ideas disclosed by the present invention shall still be covered by the claims of the present invention.

## Claims

1. A falling film melt crystallizer, comprising a cylinder, wherein a feeding port and a discharging port are respectively provided in a top region and a bottom region of the cylinder, **characterized in that**,
crystallization zones are sequentially provided within the cylinder in several levels from top to bottom,
a crystallization zone in each level is provided with multiple vertically arranged crystallization tubes; heat exchange tubes are sleeved onto respective crystallization tubes, with crystallization tubes and heat exchange tubes in adjacent crystallization zones being in one-to-one correspondence and in communication with each other;
crystallization tubes in a top level and crystallization tubes in a bottom level are in communication with the feeding port and the discharging port, respectively; wherein
a cooling/heating medium inlet/outlet communicating with top ends of the heat exchange tubes is provided on the cylinder for each level of crystallization zone; and
in the bottom level of the crystallization zones, a cooling/heating medium inlet/outlet communicating with bottom end of the heat exchange tubes is further provided in a lower region of the cylinder.

2. The falling film melt crystallizer according to claim 1, **characterized in that**, multiple swirling film distributors are additionally arranged in the cylinder, wherein
the swirling film distributors are arranged between the feeding port and the crystallization tubes in the top level of the crystallization zones, and are in one-to-one correspondence with and meanwhile in communication with the crystallization tubes in the top level,
the swirling film distributors are funnel-shaped, comprising a funnel body and a tubular part, with spiral guide grooves provided on an inner wall of the funnel body.

3. The falling film melt crystallizer according to claim 2, **characterized in that**,
a ventilation tube is provided in the swirling film distributor;
a ventilation hole is provided in an upper region of the ventilation tube, and a guide platform is provided on a top end of the ventilation tube; wherein
an outer diameter of the ventilation tube is smaller than a radial length of a bottom end of the guide platform, and an inner diameter of the ventilation tube is smaller than an inner diameter of the tubular part.

4. The falling film melt crystallizer according to claim 3, **characterized in that**, the guide platform is conical or umbrella-shaped.

5. The falling film melt crystallizer according to claim 1, **characterized in that**, multiple film redistribution heads are additionally provided in the cylinder, wherein
the film redistribution heads are installed at the connections between two crystallization tubes that are arranged in adjacent crystallization zones and are in communication with each other;
each film redistribution head comprises a material-redistribution platform and an air ventilation tube; wherein
the material-redistribution platform is provided at a top end of the air ventilation tube and is conical or umbrella-shaped; an outer diameter of the air ventilation tube is smaller than a radial length of a bottom end of the guide platform, and an inner diameter of the air ventilation tube is smaller than the inner diameter of the crystallization tube.

6. The falling film melt crystallizer according to claim 5, **characterized in that**, the film redistribution head further comprises guide vanes, wherein the air ventilation tube is fixed to an inner wall of the crystallization tubes via the guide vanes, and the guide vanes are in a triangular prism configuration.

7. The falling film melt crystallizer according to claim 1, **characterized in that**, a material supply distributor is further provided in the cylinder, wherein the material supply distributor is in communication with the feeding port, and is used to divert the materials to be purified.

8. The falling film melt crystallizer according to claim 7, **characterized in that**, the material supply distributor comprises multiple liquid dispensing heads; wherein each that liquid dispensing head is in a shape of an inverted funnel and has spiral liquid dispensing grooves provided on their inner walls; wherein the liquid dispensing heads are in one-to-one correspondence with the crystallization tubes in the top level of crystallization zones.

9. The falling film melt crystallizer according to claim 1, **characterized in that**, each level of crystallization zone is provided with a cooling/heating medium guide plate that is located below the cooling/heating medium inlet/outlet, with multiple guide holes being provided on the cooling/heating medium guide plate, wherein the guide holes are in one-to-one correspondence with and meanwhile in communication with the heat exchange tubes.

10. The falling film melt crystallizer according to claim 1, **characterized in that**, a filter screen is further provided in the cylinder, wherein the filter screen is provided between the discharge port and the crystallization tubes in the bottom level of the crystallization zones.
